(19) Europäisches Patentamt / European Patent Office / Office européen des brevets

(11) **EP 2 669 861 A1**

(12) **EUROPEAN PATENT APPLICATION**
published in accordance with Art. 153(4) EPC

(43) Date of publication:
**04.12.2013 Bulletin 2013/49**

(51) Int Cl.:
*G06Q 50/06* (2012.01)     *H02J 3/00* (2006.01)
*H02J 3/46* (2006.01)     *H02J 13/00* (2006.01)

(21) Application number: **11857235.3**

(22) Date of filing: **11.10.2011**

(86) International application number:
**PCT/JP2011/073315**

(87) International publication number:
**WO 2012/101873 (02.08.2012 Gazette 2012/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.01.2011 JP 2011013980**

(71) Applicant: **Kabushiki Kaisha Toshiba Minato-ku Tokyo 105-8001 (JP)**

(72) Inventor: **HAYASHI, Hideki Tokyo 105-8001 (JP)**

(74) Representative: **Willquist, Sofia Ellinor Awapatent AB Junkersgatan 1 582 35 Linköping (SE)**

(54) **ELECTRICITY CONTROL SYSTEM**

(57) According to one embodiment, an electricity control system includes a power plant (1), a customer (5) and a central device (100) connected to each other via a power line (6). The customer (5) includes an electricity generator (209, 210) that generates electricity. The central device (100) provides the customer (5) with feedback of an incentive indicated by a value obtained by multiplying an electricity amount injected into a grid within an electricity amount generated in the electricity generator (209, 210) by a first incentive coefficient L used when the power plant (1) has surplus electricity to supply.

FIG. 1

## Description

### FIELD

Embodiments described herein relate generally to an electricity control system that controls electricity interchanged between the supply side and the demand side.

### BACKGROUND

Adjustment of supply and demand of electricity is conventionally made by adjusting outputs from power-generating facilities that are on the electricity supply side when the mutual balance between supply and demand of the electricity is lost. This is because the demand side is provided with the electricity as an uncontrollable element. However, there is a problem of waste of the power-generating facilities if the power-generating facilities are arranged based on the demand peak of the electricity. Further, since a power grid itself is easily and largely affected by natural disasters, it generally takes a long time before the power grid returns to normal. In view of this, an intelligent power grid to spread power supply bases to interchange electricity between supply and demand, is highly required.

There is known a smart grid as a countermeasure to such a requirement. The smart grid is a power grid that functions to automatically adjust supply and demand of electricity by using measuring apparatuses equipped with artificial intelligence and communication equipment, so as to control the flow of the electricity on both supply and demand sides without human intervention, which contributes to reduction in energy consumption and cost and improvement of reliability and transparency (fairness).

Here, there is no particular rule of such a smart grid with regard to feedback of incentives to match the amount of generated or stored electricity that customers inject into the grid.

### CITATION LIST

#### Patent Literature

[PTL 1] JP 2001-357237 A

### SUMMARY

In view of the problem with such a conventional electricity control system that is the feedback of incentives when customers inject generated or stored electricity into the grid, the rule for the feedback is required to be clearly defined.

In order to solve the conventional problem, an electricity control system according to one embodiment includes a power plant, a customer and a central device connected to each other via a power line. The customer includes an electricity generator that generates electricity. The central device provides to the customer with feedback of an incentive indicated by a value obtained by multiplying an electricity amount injected into a grid within an electricity amount generated in the electricity generator by a first incentive coefficient L used when the power plant has surplus electricity to supply.

### BRIEF DESCRIPTION OF THE DRAWINGS

[FIG. 1] FIG. 1 is a block diagram illustrating a configuration of an electricity control system according to one embodiment.

[FIG. 2] FIG. 2 is a block diagram illustrating a configuration of a central device used in the electricity control system according to the embodiment.

[FIG. 3] FIG. 3 is a diagram illustrating a coefficient memory example of a second memory of the electricity control system according to the embodiment.

[FIG. 4] FIG. 4 is a diagram illustrating a memory example of a third memory of the electricity control system according to the embodiment.

[FIG. 5] FIG. 5 is a block diagram illustrating a configuration of a customer of the electricity control system according to the embodiment.

[FIG. 6] FIG. 6 is a flow chart illustrating phase determination processing executed in  the central device of the electricity control system according to the embodiment.

[FIG. 7] FIG. 7 is a flow chart illustrating transmission processing of phase 1 executed in the central device of the electricity control system according to the embodiment.

[FIG. 8] FIG. 8 is a flow chart illustrating transmission processing of phase 2 executed in the central device of the electricity control system according to the embodiment.

[FIG. 9] FIG. 9 is a flow chart illustrating transmission processing of phase 3 executed in the central device of the electricity control system according to the embodiment.

[FIG. 10] FIG. 10 is a flow chart illustrating rate calculation processing of phase 1 executed in the central device of the electricity control system according to the embodiment.

[FIG. 11] FIG. 11 is a flow chart illustrating rate calculation processing of phase 2 executed in the central device of the electricity control system according to the embodiment.

[FIG. 12] FIG. 12 is a flow chart illustrating rate calculation processing of phase 3 executed in the central device of the electricity control system according to the embodiment.

## DETAILED DESCRIPTION

Hereinafter, an electricity control system according to embodiments will be explained in detail below with reference to the drawings.

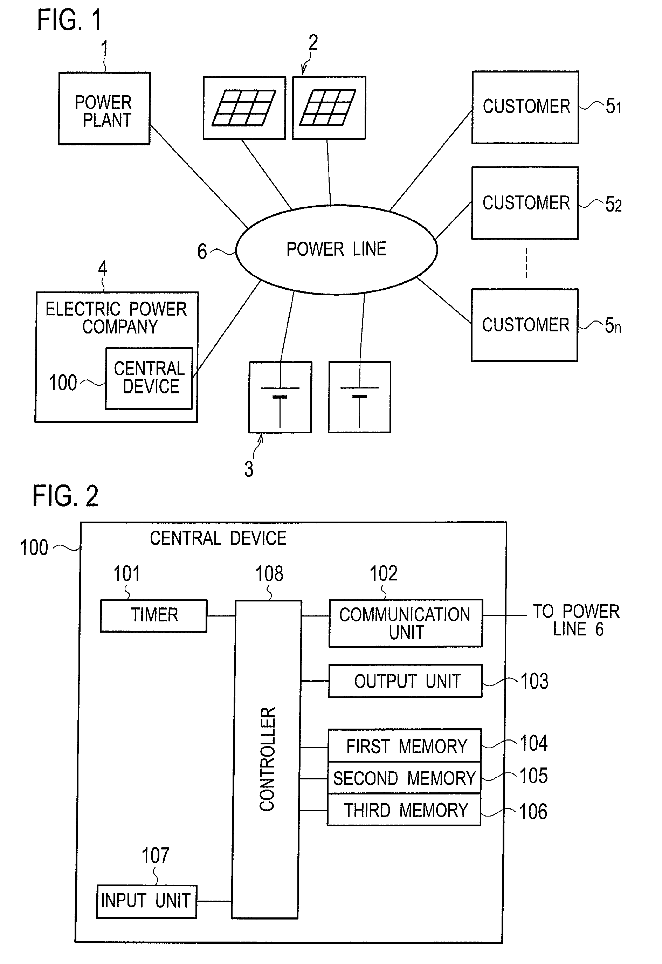

As illustrated in FIG. 1, the electricity control system according to the embodiment includes a power plant 1, large photovoltaic generation systems 2, large storage battery systems 3, an electric power company 4 and a plurality of customers $5_1$ to $5_n$ (where n is a positive integer), and these are connected to each other via a power line 6. Note that the customers $5_1$ to $5_n$ may be collectively referred to as "the customer(s) 5" if there is no necessity to individually define each of the customers $5_1$ to $5_n$.

The power plant 1 includes a thermal power plant, a hydroelectric power plant and a nuclear power plant to generate electricity and transmit it to the power line 6. The large photovoltaic generation systems 2 are also referred to as mega solar power plants that generate electricity by photoelectric conversion and transmit it to the power line 6. The large storage battery systems 3 store, for example, nighttime electricity and transmit the stored electricity to the power line 6 as necessary.

The electric power company 4 is equipped with a central device 100 that controls supply and demand of electricity and operates a billing system for the customers $5_1$ to $5_n$. The central device 100 will be explained in detail below.

The customers $5_1$ to $5_n$ include households, factories, and offices, that consume electricity supplied via the power line 6, consume electricity supplied from private power generations, and output surplus electricity to the power line 6 so as to inject into a grid. The customers 5 will be explained in detail later.

The power line 6 is used to mutually transmit and receive electricity among the power plant 1, the large photovoltaic generation systems 2, the large storage battery systems 3, the electric power company 4, and the customers 5, and are used to mutually transmit and receive transmission signals, in other words, are used for power line carrier communication. It should be noted that dedicated line communication, wireless communication, and internet communication (not illustrated) may be applicable to this embodiment, instead of the power line carrier communication by use of the power line 6.

The following is a specific explanation of the central device 100. As illustrated in FIG. 2, the central device 100 used in the electricity control system according to the embodiment, includes a timer 101, a communication unit 102, an output unit 103, a first memory 104, a second memory 105, a third memory 106, an input unit 107, and a controller 108.

The timer 101 records dates and times. The dates and times recorded by the timer 101 are transmitted to the controller 108 as date and time data.

The communication unit 102 receives information indicating electricity generation amount (electricity generation amount data u) transmitted by use of the power line carrier communication through the power line 6. The information indicating the electricity generation amount includes electricity generation amount generated by the power plant 1 and electricity generation amount generated by the customers 5. The communication unit 102 communicates with a smart meter 201 (described in detail later) of each of the customers $5_1$ to $5_n$ to acquire information with regard to the electricity consumption amount (electricity consumption data v).

The communication unit 102 transmits an instruction to reduce load or an instruction to forcibly cut off load to the smart meter 201 of the respective customers $5_1$ to $5_n$ by use of the power line carrier communication through the power line 6. The communication unit 102 transmits data (numerical values) regarding incentives to the customers $5_1$ to $5_n$ by the power line carrier communication through the power line 6.

The output unit 103 issues a card with points reflecting the incentives. The output unit 103 transmits, to financial institutions such as banks, monthly electricity rates reflecting the incentives for each of the customers $5_1$ to $5_n$.

The first memory 104 stores parameters $G_1$ to $G_6$. Each parameter is defined as follows. The contents of the first memory 104 are read by the controller 108.

$G_1$: unit price of generated electricity of superior grid (adjacent grid)

$G_2$: unit price of generated electricity in smart grid

$G_3$: price in reference area (small area) (price determined by reference to electricity price of other or own smart grid)

$G_4$: price determined in accordance with surplus electricity of grid

$G_5$: strategic price (commercial price)

$G_6$: price of past (past price and prospective price)

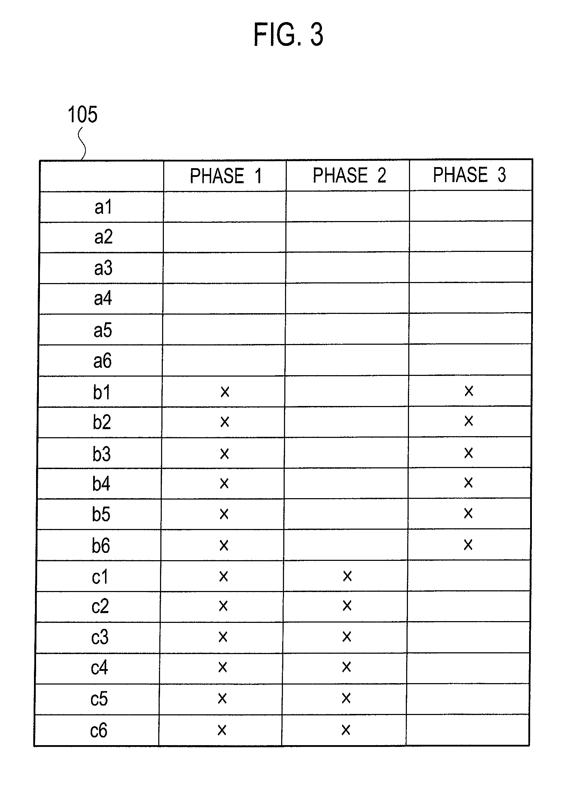

The second memory 105 stores the following coefficients. The coefficients are numerical values preliminarily determined, and are different depending on phases 1 to 3 (described in detail later). The contents of the second memory 105 are read by the controller 108. FIG. 3 illustrates a memory example of each coefficient.

$a_1, a_2, a_3, a_4, a_5, a_6$
$b_1, b_2, b_3, b_4, b_5, b_6$
$c_1, c_2, c_3, c_4, c_5, c_6$

The third memory 106 stores electricity rates Kx and incentive rates Lx, Nx, and Nx in each time period for the respective customers 5. The incentive rates Lx, Mx, and Nx are calculated as follows.

First, incentive coefficients L, M, and N are calculated. The incentive coefficient L is an incentive achieved when each customer 5 supplies electricity to the grid (unit price of 1 kWh per unit time), and is defined by the function including at least one of $G_1$ to $G_6$, for example, by the following formula (1).

$$L = a_1G_1 + a_2G_2 + a_3G_3 + a_4G_4 + a_5G_5 + a_6G_6 \quad \ldots (1)$$

The incentive coefficient M is an incentive achieved when each customer 5 selectively cuts off the load, and is defined by the function including at least one of $G_1$ to $G_6$, for example, by the following formula (2).

$$M = b_1G_1 + b_2G_2 + b_3G_3 + b_4G_4 + b_5G_5 + b_6G_6 \quad \ldots (2)$$

The incentive coefficient N is an incentive achieved when the load of each customer 5 is forcibly cut off, and is defined by the function including at least one of $G_1$ to $G_6$, for example, by the following formula (3).

$$N = c_1G_1 + c_2G_2 + c_3G_3 + c_4G_4 + c_5G_5 + c_6G_6 \quad \ldots (3)$$

Then, the incentive rates Lx, Mx and Nx are calculated by the following formulae (4) to (6).

$$Lx = L \times P \times T \quad \ldots (4)$$

$$Mx = M \times P_A \times T \quad \ldots (5)$$

$$Nx = N \times P_B \times T \quad \ldots (6)$$

where

T: unit time
P: electricity amount/hour consumed by customer
$P_A$: electricity amount /hour saved by customer
$P_B$: electricity amount /hour saved by customer

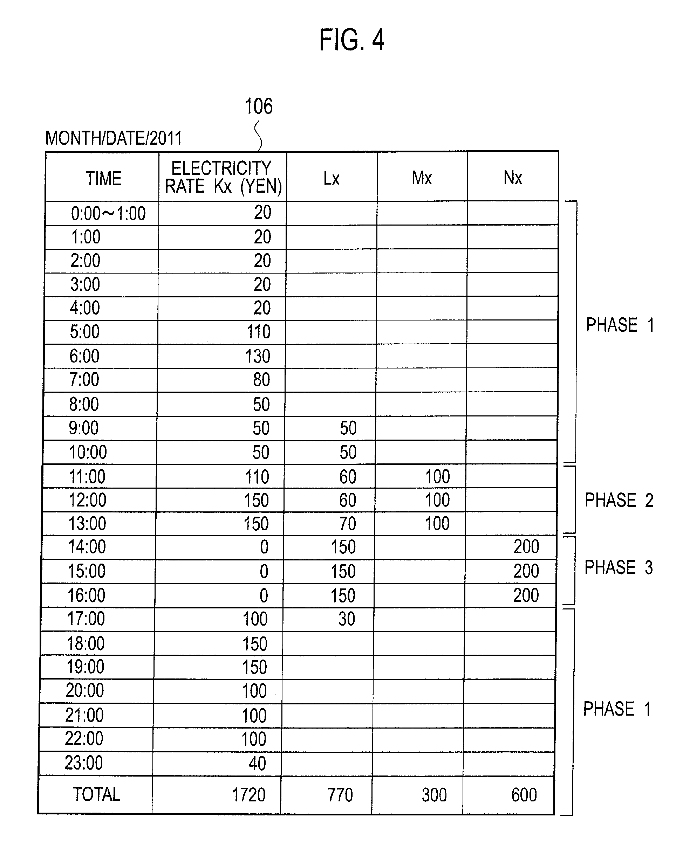

FIG. 4 is a diagram illustrating a memory example of the third memory 106, wherein unit time T represents one hour. The phase 1 represents a state where the power plant 1 has surplus electricity to supply, and $a_1$ to $a_6$ are small numbers. The phase 2 represents a state where the customer 5 is requested to selectively cut off the load in accordance with indications by a customer terminal 202 (described in detail later). In this case, $a_1$ to $a_6$ and $b_1$ to $b_6$ are moderate numbers. The phase 3 represents a state where the load of the customer 5 is forcibly cut off. In this case, the electricity supply is cut off by the smart meter 201 of the customer 5, and $a_1$ to $a_6$ and $c_1$ to $c_6$ are large numbers.

The input unit 107 inputs customer information including addresses and contracted ampere capacity of the customers 5. The customer information input from the input unit 107 is transmitted to the controller 108. The controller 108 controls entire of the central device 100. The central device 100 will be explained in detail later.

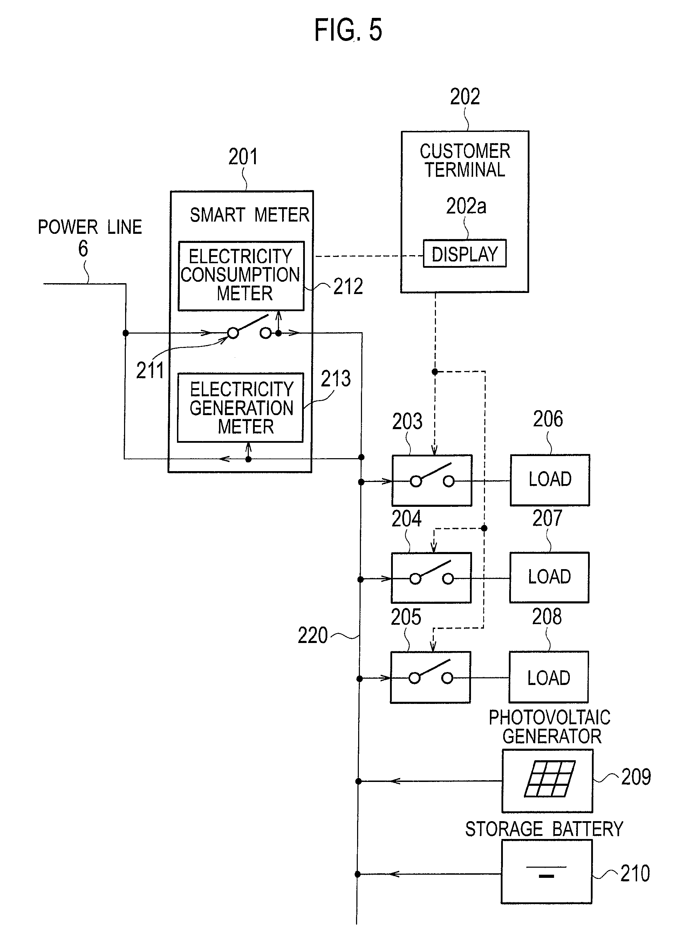

The following is a specific explanation of the customers 5. As illustrated in FIG. 5, each of the customers 5 included in the electricity control system according to the embodiment includes the smart meter 201, the customer terminal 202, breaker switches 203 to 205, loads 206 to 208, a photovoltaic generator 209, and a storage battery 210. The smart meter 201, the breaker switches 203 to 205, the photovoltaic generator 209,  and the storage battery 210 are connected to each other via an internal power line 220.

The smart meter 201 includes the breaker switch 211, an electricity consumption meter 212 and an electricity generation meter 213. The breaker switch 211 controls the output of electricity transmitted from the power line 6 to the internal power line 220. When the breaker switch 211 is in the ON state, the electricity transmitted from the power line 6 is output to the internal power line 220.

The electricity consumption meter 212 measures electricity amount output to the internal power line 220 from the power line 6 via the breaker switch 211. The electricity generation meter 213 measures the electricity amount output to the power line 6 and inject into the grid from the photovoltaic generator 209 and/or the storage battery 210 via the internal power line 220.

The customer terminal 202 includes a display 202a. The customer terminal 202 functions as a receiver to receive data transmitted from the power line 6 via the smart meter 201 by the power line carrier communication. The customer terminal 202 displays the received data on the display 202a, and generates a control signal based on the received data to transmit it to the breaker switches 203 to 205, so as to control the ON-OFF state of the breaker switches 203 to 205.

The breaker switches 203 to 205 control the transmission, to the loads 206 to 208, of the electricity supplied from the power line 6 via the smart meter 201 based on the control signal from the customer terminal 202, or the electricity output to the internal power line 220 from the photovoltaic generator 209 or the storage battery 210.

The loads 206 to 208 consist of electrical equipment and the like installed in the customers 5. The photovoltaic generator 209 generates electricity by photoelectric conversion and outputs it to the internal power line 220. The storage battery 210 stores electricity (for example, nighttime electricity) and outputs it to the internal power line 220 as necessary. An electricity generator according to the present embodiment consists of at least one of the photovoltaic generator 209 and storage battery 210.

The following is an explanation of the operation of the electricity control system having the above-described configuration. Here, the operation of the central device 100 is mainly explained below.

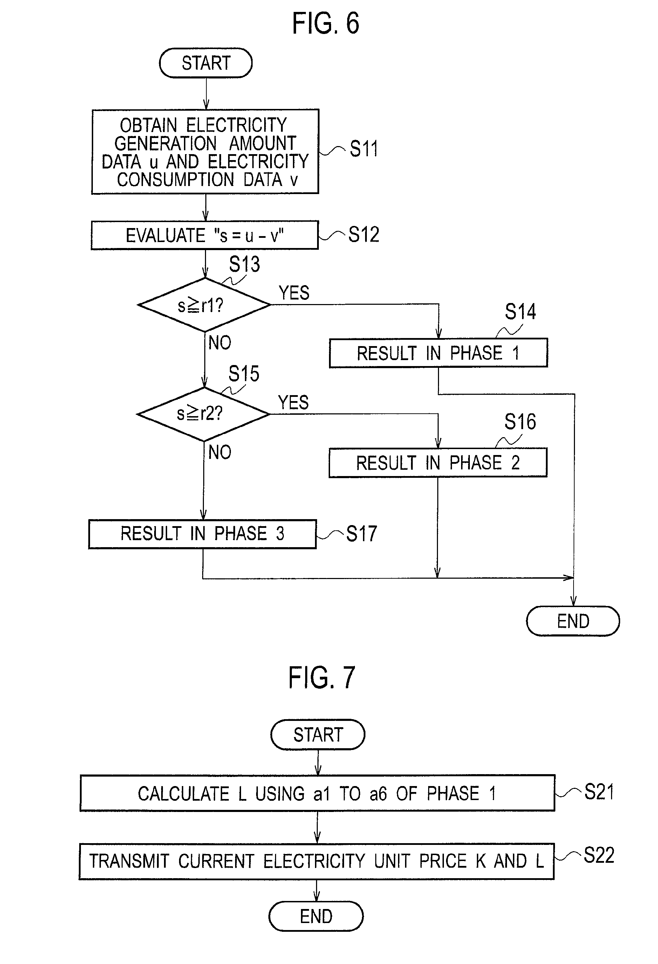

FIG. 6 is a flow chart illustrating phase determination processing executed in the central device 100. In the phase determination processing, electricity generation amount data u and electricity consumption data v each are obtained first (step S11). In particular, the controller 108 obtains the electricity generation amount data u and the electricity consumption data v from the power line 6 via the communication unit 102.

Next, difference s is obtained by subtracting the electricity consumption data v from the electricity generation amount u (step S 12). Namely, the controller 108 evaluates the expression "s = u - v" with reference to the electricity consumption data v and the electricity generation amount u each obtained in step S11.

Then, whether the difference s is greater than or equal to a predetermined value r1 is determined (step S13). In particular, the controller 108 determines whether the inequality "s ≥ r1" is conformity or not by doing subtraction in step S12. When the inequality "s ≥ r1" is conformity in step 13, the phase determination processing results in the phase 1 (step S 14). In other words, the controller 108 determines that the power plant 1 has surplus electricity to supply. The processing executed in the phase 1 will be explained in detail below. This completes the phase determination processing.

When the inequality "s ≥ r1" is not conformity in step 13, whether the difference s is greater than or equal to the predetermined value r2 is then determined (step S 15). Namely, the controller 108 determines whether the inequality "s ≥ r2" is conformity or not by doing subtraction in step S12. Here, the predetermined values r1 and r2 fulfill the inequality "r1 > r2". When the inequality "s ≥ r2" is conformity in step 15, the phase determination processing results in the phase 2 (step S16). In other words, the controller 108 determines to request the customer 5 to cut off the load. The processing executed in the phase 2 will be explained in detail later. This completes the phase determination processing.

When the inequality "s ≥ r2" is not conformity in step 15, the phase determination processing results in the phase 3 (step S17). In other words, the controller 108 determines to forcibly cut off the load of the customer 5. The processing executed in the phase 3 will be explained in detail later. This completes the phase determination processing.

The following is an explanation of transmission processing executed in the central device 100. FIG. 7 is a flow chart illustrating the transmission processing of the phase 1 executed in the central device 100. This transmission processing is executed when the phase determination processing results in the phase 1. In the transmission processing of the phase 1, first, the incentive coefficient L is calculated by use of the coefficients $a_1$ to $a_6$ of the phase 1 (step S21). In particular, the controller 108 reads out $G_1$ to $G_6$ from the first memory 104, and obtains the coefficients $a_1$ to $a_6$ of the phase 1 from the second memory 105, so as to calculate the incentive coefficient L according to the formula (1).

Next, the transmission of the current electricity unit price K and incentive coefficient L is carried out (step S22). That is, the controller 108 outputs, to the power line 6 via the communication unit 102, the electricity unit price K in a specified time period corresponding to the date and time data recorded by the timer 101 and the incentive coefficient L calculated in step S21. The customer terminal 202 of the customer 5 thus receives the electricity unit price K and the incentive coefficient L via the smart meter 201, and displays the information on the display 202a.

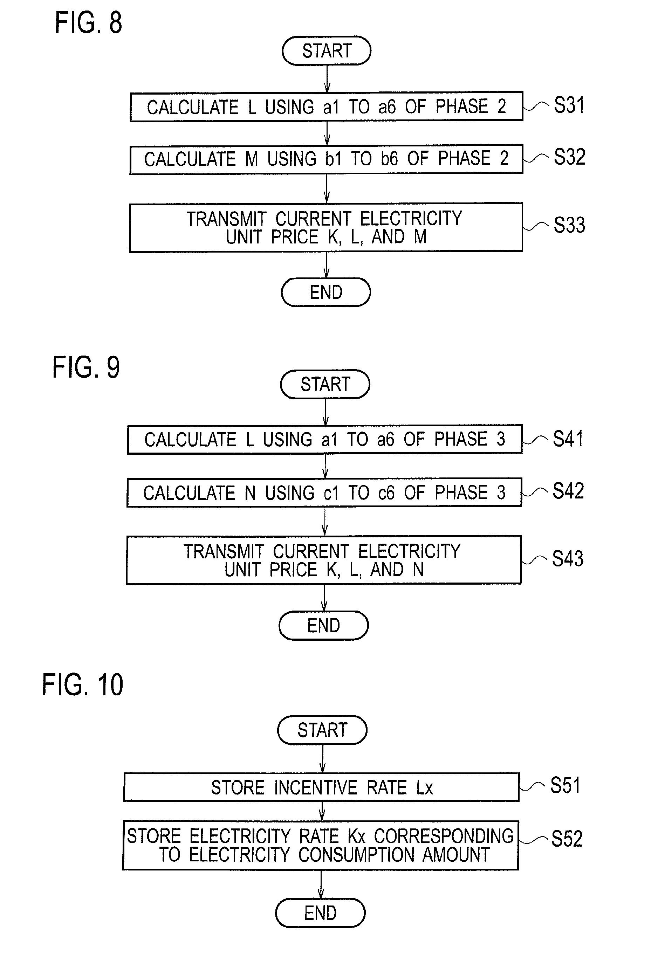

FIG. 8 is a flow chart illustrating the transmission processing of the phase 2 executed in the central device 100. The transmission processing of the phase 2 is executed when the phase determination processing results in the phase 2. In the transmission processing of the phase 2, first, the incentive coefficient L is calculated by use of the coefficients $a_1$ to $a_6$ of the phase 2 (step S31). In particular, the controller 108 reads out $G_1$ to $G_6$ from the first memory 104, and obtains the coefficients $a_1$ to $a_6$ of the phase 2 from the second memory 105, so as to calculate the incentive coefficient L according to the formula (1).

Next, the incentive coefficient M is calculated by use of the coefficients $b_1$ to $b_6$ of the phase 2 (step S32). In particular, the controller 108 reads out $G_1$ to $G_6$ from the first memory 104, and obtains the coefficients $b_1$ to $b_6$ of the phase 2 from the second memory 105, so as to calculate the incentive coefficient M according to the formula (2).

Then, the transmission of the current electricity unit price K and incentive coefficients L and M is carried out (step S33). That is, the controller 108 outputs, to the power line 6 via the communication unit 102, the electricity unit price K in a specified time period corresponding to the date and time data recorded by the timer 101, the incentive coefficient L calculated in step S31 and the incentive coefficient M calculated in step S32. The customer terminal 202 of the customer 5 thus receives the electricity unit price K and the incentive coefficients L and M via the smart meter 201, and displays the information on the display 202a.

The customer 5 selects one or more of the loads by its own will in accordance with the indication displayed on the display 202a, and cuts off the electricity supply by operating one or more of the breaker switches 203 to 205 corresponding to the selected loads. Alternatively, the customer terminal 202 may automatically select one or more of the loads to cut off the electricity supply. In this case, the priority order among the loads to be cut off may be preliminarily determined, or a table indicating the time or daily schedule of the loads to be cut off may be prepared, so as to select one or more of the loads according to the priority order or the table and thereby cut off the electricity supply.

FIG. 9 is a flow chart illustrating the transmission processing of the phase 3 executed in the central device 100. The transmission processing of the phase 3 is executed when the phase determination processing results in the phase 3. In the transmission processing of the phase 3, first, the incentive coefficient L is calculated by use of the coefficients $a_1$ to $a_6$ of the phase 3 (step S41). In particular, the controller 108 reads out $G_1$ to $G_6$ from the first memory 104, and obtains the coefficients $a_1$ to $a_6$ of the phase 3 from the second memory 105, so as to calculate the incentive coefficient L according to the formula (1).

Next, the incentive coefficient N is calculated by use of the coefficients $c_1$ to $c_6$ of the phase 3 (step S42). In particular, the controller 108 reads out $G_1$ to $G_6$ from the first memory 104, and obtains the coefficients $c_1$ to $c_6$ of the phase 3 from the second memory 105, so as to calculate the incentive coefficient N according to the formula (3).

Then, the transmission of the current electricity unit price K and incentive coefficients L and N is carried out (step S43). That is, the controller 108 outputs, to the power line 6 via the communication unit 102, the electricity unit price K in a specified time period corresponding to the date and time data recorded by the timer 101, the incentive coefficient L calculated in step S41, and the incentive coefficient N calculated in step S42. The customer terminal 202 of the customer 5 thus receives the electricity unit price K and the incentive coefficients L and N via the smart meter 201, and displays the information on the display 202a. One or more of the selected loads of the customer 5 is forcibly cut off according to the indicationdisplayed on the display 202a.

The following is an explanation of rate calculation processing (incentive rate calculation processing) executed in the central device 100. FIG. 10 is a flow chart illustrating the rate calculation processing of the phase 1 executed in the central device 100. This rate calculation processing is executed when the phase determination processing results in the phase 1. In the rate calculation processing of the phase 1, first, the incentive rates Lx are calculated and stored (step S51).

In particular, the controller 108 calculates the incentive rates (points) Lx in each time period according to the formula (4) based on the electricity amount P (kWh/hour) generated and injected into the grid by the customer 5 and the incentive coefficient L preliminarily calculated (refer to FIG. 7), and stores the calculated incentive rates Lx in the third memory 106. Note that the electricity amount P is a sum of the electricity generated by the photovoltaic generator 209 of the customer 5 and the electricity stored in the storage battery 210 (the same shall apply hereinafter).

Next, the electricity rates Kx in accordance with the electricity consumption amount are stored (step S52). In particular, the controller 108 stores, in the third memory 106, the electricity rates Kx in accordance with the electricity consumption amount consumed by the customer 5 in each time period corresponding to the date and time data recorded by the timer 101. Accordingly, the customer 5 is provided with the feedback of the incentive corresponding to a sum of the incentive rates Lx in each time period stored in the third memory 106. The feedback of the incentive may be provided in a manner such that points are assigned, a point card or a gift card is issued, or an electricity rate is offset.

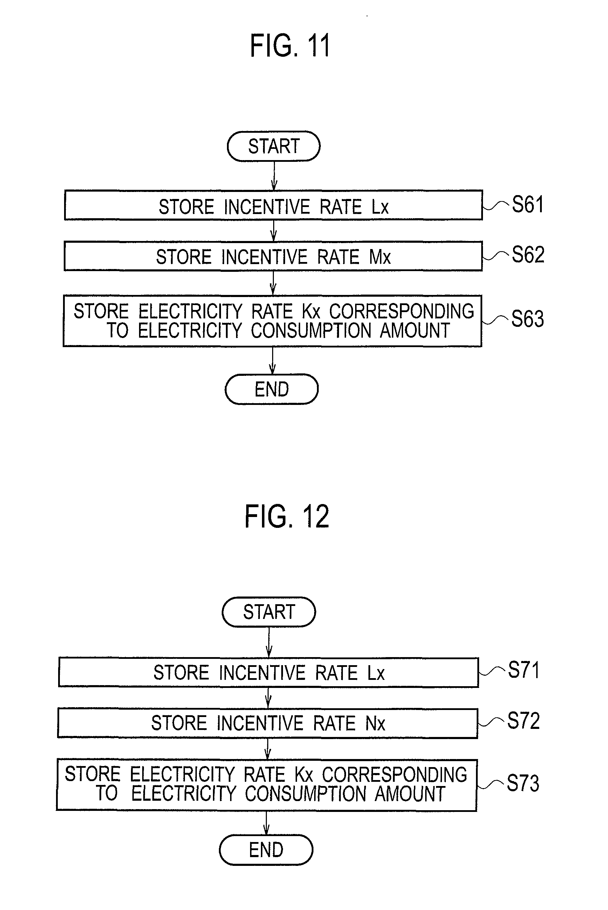

FIG. 11 is a flow chart illustrating the rate calculation processing of the phase 2 executed in the central device 100. This rate calculation processing is executed when the phase determination processing results in the phase 2. In the rate calculation processing of the phase 2, first, the incentive rates Lx are calculated and stored (step S61). In particular, the controller 108 calculates the incentive rates Lx in each time period according to the formula (4) based on the electricity amount P (kWh/hour) generated and injected into the grid by the customer 5 and the incentive coefficient L preliminarily calculated (refer to FIG. 8), and stores the calculated incentive rates Lx in the third memory 106.

Next, the incentive rates Mx are calculated and stored (step S62). In particular, the controller 108 calculates the incentive rates Mx in each time period according to the formula (5) based on the electricity amount $P_A$ (kWh/hour) cut off by the customer 5 and the incentive coefficient M preliminarily calculated (refer to FIG. 8), and stores the calculated incentive rates Mx in the third memory 106. Here, the electricity amount $P_A$ (kWh/hour) cut off by the customer 5 is determined according to the contracted ampere capacity of the customer 5 and an available ampere capacity transmitted to the customer 5 from the central device 100. For example, when the contracted ampere capacity of the customer 5 is 60 A and the available ampere capacity is 20 A, the electricity amount $P_A$ (kWh/hour) cut off by the customer 5 is expressed by "$P_A$ = (60 A - 20 A) $\times$ 100 V (the power factor is regarded as 1.0)". Alternatively, the electricity amount $P_A$ (kWh/hour) cut off by the customer 5 may be calculated from the past electricity consumption amount such as the electricity consumption amount of the last year or the previous day.

Then, the electricity rates Kx in accordance with the electricity consumption amount is stored (step S63). In particular, the controller 108 stores, in the third memory 106, the electricity rates Kx in accordance with the electricity consumption amount consumed by the customer 5 in each time period corresponding to the date and time data recorded by the timer 101. Accordingly, the customer 5 is provided with the feedback of the incentive corresponding to a sum of the incentive rates Lx and Mx stored in the third memory 106 in each time period. The feedback of the incentive may be provided in a manner such that points are assigned, a point card or a gift card is issued, or an electricity rate is offset.

FIG. 12 is a flow chart illustrating the rate calculation processing of the phase 3 executed in the central device 100. This rate calculation processing is executed when the phase determination processing results in the phase 3. In the rate calculation processing of the phase 3, first, the incentive rates Lx are calculated and stored (step S71). In particular, the controller 108 calculates the incentive rates Lx in each time period according to the formula (4) based on the electricity amount P (kWh/hour) generated and injected into the grid by the customer 5 and the incentive coefficient L preliminarily calculated (refer to FIG. 9), and stores the calculated incentive rates Lx in the third memory 106.

Next, the incentive rates Nx are calculated and stored (step S72). In particular, the controller 108 calculates the incentive rates Nx in each time period according to the formula (6) based on the electricity amount $P_B$ (kWh/hour) forcibly cut off and the incentive coefficient N preliminarily calculated (refer to FIG. 9), and stores the calculated incentive rates Nx in the third memory 106.

The electricity amount $P_B$ (kWh/hour) forcibly cut off is treated as one that corresponds to the contracted ampere capacity of the customer 5. For example, when the contracted ampere capacity of the customer 5 is 60 A, the electricity amount $P_B$ (kWh/hour) forcibly cut off is expressed by "$P_B$ = 60 A $\times$ 100 V (the power factor is regarded as 1.0)". Alternatively, the electricity amount $P_B$ (kWh/hour) forcibly cut off may be calculated from the past electricity consumption amount such as the electricity consumption amount of the last year or the previous day.

Then, the electricity rates Kx in accordance with the electricity consumption amount are stored (step S73). In particular, the controller 108 stores, in the third memory 106, the electricity rates Kx in accordance with the electricity consumption amount consumed by the customer 5 in each time period corresponding to the date and time data recorded by the timer 101. When the electricity is cut off properly, the electricity rates Kx becomes zero (Kx = 0), which is stored in the third memory 106. Accordingly, the customer 5 is provided with the feedback of the incentive corresponding to the sum of the incentive rates Lx and Nx in each time period stored in the third memory 106. The feedback of the incentive may be provided in a manner such that points are assigned, a point card, or a gift card is issued or an electricity rate is offset.

As described above, the electricity control system according to the embodiment can clearly define the rule of the feedback of the incentives achieved when the customers 5 injected the generated or stored electricity into the grid.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. An electricity control system comprising a power plant, a customer and a central device connected to each other via a power line, wherein
the customer comprises an electricity generator that generates electricity, and
the central device provides to the customer with feedback of an incentive indicated by a value obtained by multiplying an electricity amount injected into a grid within an electricity amount generated in the electricity generator by a first incentive coefficient L used when the power plant has surplus electricity to supply.

2. The electricity control system according to claim 1, wherein the first incentive coefficient L is obtained by a function including at least one of a unit price of electricity generated in a superior grid (adjacent grid) $G_1$, a unit price of electricity generated in a smart grid $G_2$, a price in a reference area $G_3$, a price determined in accordance with surplus electricity of the grid $G_4$, a strategic price $G_5$, and a past price $G_6$.

3. The electricity control system according to claim 1 or 2, wherein the customer is provided with the feedback of the incentive in a manner such that points are assigned, a point card or a gift card is issued, or an electricity rate is offset.

4. An electricity control system comprising a customer and a central device connected to each other via a power line, wherein
the customer comprises a receiving unit to receive a telegram transmitted from the central device to request to cut off at least one of loads,
the central device provides to the customer, when the telegram to request to cut off the load is received by the receiving unit, with feedback of an incentive indicated by a value obtained by multiplying an electricity amount assumed to be saved by cutting off corresponding load by a second incentive coefficient M used when the customer is requested to cut off the load or a third incentive coefficient N used when the load of the customer is forcibly cut off.

5. The electricity control system according to claim 4, wherein each of the second incentive coefficient M and the third incentive coefficient N is obtained by a function including at least one of a unit price of electricity generated in a superior grid (adjacent grid) $G_1$, a unit price of electricity generated in a smart grid $G_2$, a price in a reference area $G_3$, a price determined in accordance with surplus electricity of the grid $G_4$, a strategic price $G_5$, and a past price $G_6$.

6. The electricity control system according to claim 4, wherein the customer comprises a breaker switch by which external electricity supplied to a part of the loads is cut off in accordance with an instruction from the central device, and the second incentive coefficient M used when the customer is requested to cut off the corresponding load by operating the breaker switch, is a value corresponding to a difference between a contracted ampere capacity of the customer and an available ampere capacity indicated by the central device.

7. The electricity control system according to claim 4, wherein the customer comprises a smart meter by which external electricity supplied to all of the loads is cut off in accordance with an instruction from the central device, and the third incentive coefficient N used when the loads of the customer are forcibly cut off by the smart meter, is a value corresponding to a contracted ampere capacity of the customer.

8. The electricity control system according to any one of claims 4 to 7, wherein the customer is provided with the feedback of the incentive in a manner such that points are assigned, a point card or a gift card is issued, or an electricity rate is offset.

FIG. 1

FIG. 2

# FIG. 3

105

| | PHASE 1 | PHASE 2 | PHASE 3 |
|---|---|---|---|
| a1 | | | |
| a2 | | | |
| a3 | | | |
| a4 | | | |
| a5 | | | |
| a6 | | | |
| b1 | X | | X |
| b2 | X | | X |
| b3 | X | | X |
| b4 | X | | X |
| b5 | X | | X |
| b6 | X | | X |
| c1 | X | X | |
| c2 | X | X | |
| c3 | X | X | |
| c4 | X | X | |
| c5 | X | X | |
| c6 | X | X | |

# FIG. 4

106

MONTH/DATE/2011

| TIME | ELECTRICITY RATE Kx (YEN) | Lx | Mx | Nx | |
|---|---|---|---|---|---|
| 0:00~1:00 | 20 | | | | PHASE 1 |
| 1:00 | 20 | | | | |
| 2:00 | 20 | | | | |
| 3:00 | 20 | | | | |
| 4:00 | 20 | | | | |
| 5:00 | 110 | | | | |
| 6:00 | 130 | | | | |
| 7:00 | 80 | | | | |
| 8:00 | 50 | | | | |
| 9:00 | 50 | 50 | | | |
| 10:00 | 50 | 50 | | | |
| 11:00 | 110 | 60 | 100 | | PHASE 2 |
| 12:00 | 150 | 60 | 100 | | |
| 13:00 | 150 | 70 | 100 | | |
| 14:00 | 0 | 150 | | 200 | PHASE 3 |
| 15:00 | 0 | 150 | | 200 | |
| 16:00 | 0 | 150 | | 200 | |
| 17:00 | 100 | 30 | | | PHASE 1 |
| 18:00 | 150 | | | | |
| 19:00 | 150 | | | | |
| 20:00 | 100 | | | | |
| 21:00 | 100 | | | | |
| 22:00 | 100 | | | | |
| 23:00 | 40 | | | | |
| TOTAL | 1720 | 770 | 300 | 600 | |

11

# FIG. 5

POWER LINE
6

**201** SMART METER

ELECTRICITY CONSUMPTION METER 212

211

ELECTRICITY GENERATION METER 213

**202** CUSTOMER TERMINAL

202a

DISPLAY

203

204

205

220

206 LOAD

207 LOAD

208 LOAD

PHOTOVOLTAIC GENERATOR

209

STORAGE BATTERY

210

## FIG. 6

```
        ┌─────────┐
        │  START  │
        └────┬────┘
             │
 ┌───────────────────────┐
 │ OBTAIN ELECTRICITY    │
 │ GENERATION AMOUNT     │─── S11
 │ DATA u AND ELECTRICITY│
 │ CONSUMPTION DATA v    │
 └───────────┬───────────┘
             │
 ┌───────────────────────┐
 │ EVALUATE "s = u – v"  │─── S12
 └───────────┬───────────┘
             │  S13
           ◇─┴─◇    YES
          ╱ s≧r1? ╲──────────────┐
           ◇───◇                 │
             │ NO          ┌──────────────────────┐
             │             │ RESULT IN PHASE 1    │─ S14
             │  S15        └──────────┬───────────┘
           ◇─┴─◇    YES               │
          ╱ s≧r2? ╲──────────┐        │
           ◇───◇             │        │
             │ NO      ┌──────────────────────┐
             │         │ RESULT IN PHASE 2    │─ S16
             │         └──────────┬───────────┘
 ┌──────────────────────┐        │        │
 │ RESULT IN PHASE 3    │─ S17   │        │
 └──────────┬───────────┘        │        │
            │                    │        │
            └────────────────────┴───┬────┘
                                     │
                                ┌────────┐
                                │  END   │
                                └────────┘
```

## FIG. 7

```
        ┌─────────┐
        │  START  │
        └────┬────┘
             │
┌──────────────────────────────────────────┐
│ CALCULATE L USING a1 TO a6 OF PHASE 1     │─ S21
└─────────────────────┬────────────────────┘
                      │
┌──────────────────────────────────────────┐
│ TRANSMIT CURRENT ELECTRICITY UNIT PRICE K AND L │─ S22
└─────────────────────┬────────────────────┘
                      │
                ┌─────────┐
                │   END   │
                └─────────┘
```

FIG. 8

START

CALCULATE L USING a1 TO a6 OF PHASE 2 ⌐ S31

CALCULATE M USING b1 TO b6 OF PHASE 2 ⌐ S32

TRANSMIT CURRENT ELECTRICITY
UNIT PRICE K, L, AND M ⌐ S33

END

FIG. 9

START

CALCULATE L USING a1 TO a6 OF PHASE 3 ⌐ S41

CALCULATE N USING c1 TO c6 OF PHASE 3 ⌐ S42

TRANSMIT CURRENT ELECTRICITY
UNIT PRICE K, L, AND N ⌐ S43

END

FIG. 10

START

STORE INCENTIVE RATE Lx ⌐ S51

STORE ELECTRICITY RATE Kx CORRESPONDING
TO ELECTRICITY CONSUMPTION AMOUNT ⌐ S52

END

# FIG. 11

```
           ( START )
               │
               ▼
┌──────────────────────────────────┐
│     STORE INCENTIVE RATE Lx       │──S61
└──────────────────────────────────┘
               │
               ▼
┌──────────────────────────────────┐
│     STORE INCENTIVE RATE Mx       │──S62
└──────────────────────────────────┘
               │
               ▼
┌──────────────────────────────────┐
│ STORE ELECTRICITY RATE Kx CORRESPONDING │──S63
│   TO ELECTRICITY CONSUMPTION AMOUNT     │
└──────────────────────────────────┘
               │
               ▼
           (  END  )
```

# FIG. 12

```
           ( START )
               │
               ▼
┌──────────────────────────────────┐
│     STORE INCENTIVE RATE Lx       │──S71
└──────────────────────────────────┘
               │
               ▼
┌──────────────────────────────────┐
│     STORE INCENTIVE RATE Nx       │──S72
└──────────────────────────────────┘
               │
               ▼
┌──────────────────────────────────┐
│ STORE ELECTRICITY RATE Kx CORRESPONDING │──S73
│   TO ELECTRICITY CONSUMPTION AMOUNT     │
└──────────────────────────────────┘
               │
               ▼
           (  END  )
```

| | INTERNATIONAL SEARCH REPORT | International application No. |
|---|---|---|
| | | PCT/JP2011/073315 |

**A. CLASSIFICATION OF SUBJECT MATTER**
*G06Q50/06*(2012.01)i, *H02J3/00*(2006.01)i, *H02J3/46*(2006.01)i, *H02J13/00* (2006.01)i

According to International Patent Classification (IPC) or to both national classification and IPC

**B. FIELDS SEARCHED**

Minimum documentation searched (classification system followed by classification symbols)
G06Q50/06, H02J3/00, H02J3/46, H02J13/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2010-233352 A (The Tokyo Electric Power Co., Inc.), 14 October 2010 (14.10.2010), paragraphs [0041] to [0055] (Family: none) | 1-3 |
| X | JP 2002-345177 A (Nippon Telegraph and Telephone Corp.), 29 November 2002 (29.11.2002), paragraphs [0012] to [0034] (Family: none) | 4-8 |

☐ Further documents are listed in the continuation of Box C.      ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 04 January, 2012 (04.01.12) | 17 January, 2012 (17.01.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2001357237 A